# EUROPEAN PATENT SPECIFICATION

(11) **EP 2 682 798 B1**
(45) Date of publication and mention of the grant of the patent: **13.01.2016**
(21) Application number: 12174556.6
(22) Date of filing: 02.07.2012
(51) Int. Cl.: G02B 7/08

(54) **Focusing device**
Fokussierungsvorrichtung
Dispositif de focalisation

(43) Date of publication of application: 08.01.2014
(73) Proprietor: Axis AB, 223 69 Lund (SE)
(72) Inventor: Hjelmström, Jonas, 245 92 Staffanstorp (SE)
(74) Representative: Awapatent AB

(56) References cited:
- JP-A- 2003 014 908
- JP-A- 2004 226 775
- JP-A- 2006 319 047
- JP-A- 2007 151 221

## Description

### Technical field

The present invention relates to a focusing device.

### Background art

In surveillance cameras, usually a first manual coarse adjustment is made on the lens focus ring. After that, a fine adjustment of the focus is performed, remotely. The fine adjustment could, e.g., be realized by moving the image sensor in relation to the lens. It is however very difficult to move an image sensor without tilting it at the same time. A problem with tilting the image sensor is that it causes parts of the resulting image to be unfocused. Furthermore, the amount of fine adjustment of the focus is not satisfactory.

### Summary of the invention

In view of the above, an objective of the invention is to solve or at least reduce one or several of the drawbacks discussed above. Generally, the above objective is achieved by the attached independent patent claims. According to a first aspect, the present invention is realized by a focusing device. The focusing devise comprises: a lens, a lens plate, an image sensor, an image sensor plate, at least two rotatable structures, and at least two strips, wherein the lens is connected to the lens plate, the image sensor is connected to the image sensor plate, wherein each strip is arranged to be wound onto one of the rotatable structures, respectively, the rotatable structures and the strips are arranged between the lens plate and the image sensor plate, the rotatable structures and/or the strips are arranged in contact with the lens plate and the image sensor plate, and wherein a distance between the lens and the image sensor is adjusted by winding the strips onto or off the rotatable structures.

JP 2004 226775 relates to a lens driving device and an imaging element driving device and has elastic members arranged in parallel to each other.

This is advantageous in that the risk of accidentally tilting the image sensor and/or the lens during focusing is decreased. Furthermore, a better fine adjustment of the focus is achieved.

The lens and the image sensor may be essentially parallel with each other.

The strips may be wound onto or off the rotatable structures due to rotation of the rotatable structures in relation to at least one of the lens plate and the image sensor plate.

A rotational axis of each rotatable structure may be parallel to an axis extending from a centre of at least one of the lens plate and the image sensor plate to a perimeter of at least one of the lens plate and the image sensor plate.

Each rotatable structure may have a linearly increasing radius around its perimeter from a smallest to a largest radius, and wherein a thickness of each strip corresponds to a difference between the largest radius and the smallest radius. This is advantageous in that the distance between the lens and the image sensor is adjusted continuously.

At least one of the image sensor plate and the lens plate may be stationary.

The focusing device may further comprise a holder for holding the rotatable structures at a fixed distance from each other. This is advantageous in that the amount of winding onto the respective rotatable structures in relation to each other is kept constant. Furthermore, the holder lets the rotatable structures keep their positions in relation to each other.

The holder and the rotatable structures may be connected by at least one from the group of: an axle extending from the holder into an opening of each rotatable structure, and an axle extending from each rotatable structure into the holder.

The rotatable structures may be arranged in an opening of the holder, or the rotatable structures may be arranged around the holder. Arranging the rotatable structures in an opening of the holder is advantageous in that more space is available in between the lens plate and the image sensor plate. Arranging the rotatable structures around the holder is advantageous in that less space is taken up by the focusing device.

Said rotation of the rotatable structures in relation to at least one of the lens plate and the image sensor plate may be arranged to be induced by at least one of the image sensor plate, the lens plate and the holder.

Said rotation of the rotatable structures in relation to at least one of the lens plate and the image sensor plate may be arranged to be induced by at least one of the image sensor plate, the lens plate and the holder rotating.

The focusing device may further comprise a retainer for retaining the rotatable structures within a circle within a perimeter of at least one of the lens plate and the image sensor plate.

The retainer may be at least one from the group of: the holder according to the above, a circular arched portion of at least one of the lens plate and the image sensor plate at least partially enclosing the rotatable structures, a circular brim on at least one of the lens plate and the image sensor plate arranged on an inside or an outside of the rotatable structures, and a circular brim arranged on an outside of each of the rotatable structures.

The distance between the lens and the image sensor may have a maximum value and the focusing device may comprise means for preventing the distance between the lens and the image sensor to exceed the maximum value. This is advantageous in that the strips are not wound onto the rotatable structures so much that it is not possible to wind them off again.

Said means may be at least one from the group of a mechanical stop, a stop in the winding of the strips onto the rotatable structures or a stop controlled by a central processing unit controlling the rotation of the rotatable structures in relation to at least one of the lens plate and the image sensor plate.

The focusing device may further comprise a first gear ring arranged on at least one of the lens plate and the image sensor plate and a second gear ring arranged on each rotatable structure and wherein the gear rings are arranged to engage in each other. This is advantageous in that the gear rings help running the rotation. Furthermore, the amount of winding onto the respective rotatable structures in relation to each other is kept constant.

Other objectives, features and advantages of the present invention will appear from the following detailed disclosure, from the attached claims as well as from the drawings.

Generally, all terms used in the claims are to be interpreted according to their ordinary meaning in the technical field, unless explicitly defined otherwise herein. All references to "a/an/the [element, device, component, means, step, etc]" are to be interpreted openly as referring to at least one instance of said element, device, component, means, step, etc., unless explicitly stated otherwise. The steps of any method disclosed herein do not have to be performed in the exact order disclosed, unless explicitly stated.

### Brief Description of the Drawings

Other features and advantages of the present invention will become apparent from the following detailed description of a presently preferred embodiment, with reference to the accompanying drawings, in which
Fig. 1 is a partly exploded perspective view of the inventive focusing device,
Fig. 2a is a perspective view of an embodiment of the inventive focusing device,
Fig. 2b is a perspective view of the embodiment of Fig. 2a but without a top plate,
Fig. 3 is a perspective view of an embodiment of the inventive focusing device,
Fig. 4 is a perspective view of a cross-section of an embodiment of the inventive focusing device,
Fig. 5 is a perspective view of an embodiment of the inventive focusing device, and
Fig. 6 is a cross-section view of an embodiment of the inventive focusing device.

### Detailed description of preferred embodiments of the invention

The present invention will now be described more fully hereinafter with reference to the accompanying drawings, in which certain embodiments of the invention are shown. This invention may, however, be embodied in many different forms and should not be construed as limited to the embodiments set forth herein; rather, these embodiments are provided by way of example so that this disclosure will be thorough and complete, and will fully convey the scope of the invention to those skilled in the art. Like numbers refer to like elements throughout.

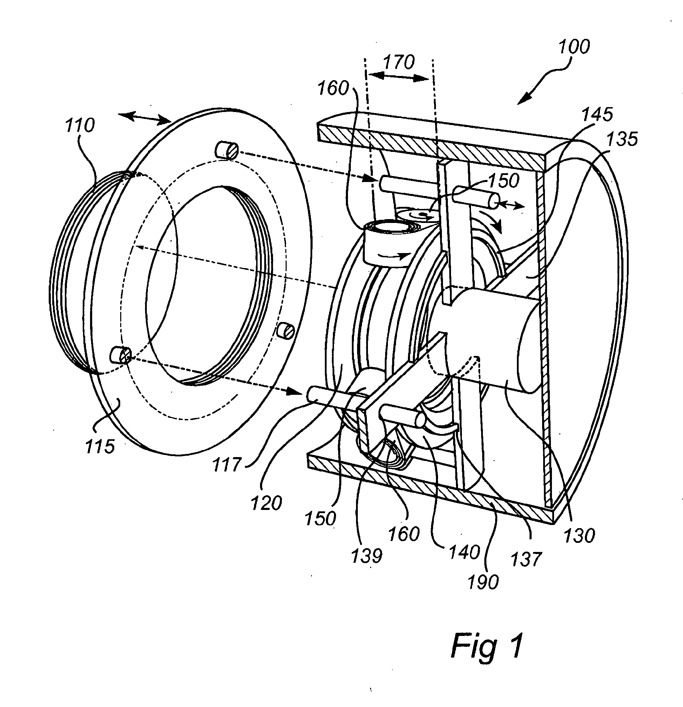

Fig. 1 illustrates an embodiment of the inventive focusing device. The focusing device 100 comprises a lens 110, a lens holder 115, a lens plate 120, an image sensor 130, an image sensor plate 140, three rotatable structures 150, and three strips 160. The lens and the lens plate are fixed in relation to each other in a direction of an optical axis of the focusing device. If the lens plate is moved a distance in said direction, the lens is moved an equal distance in the equal direction. Furthermore, the image sensor and the image sensor plate are also fixed in relation to each other in the direction of the optical axis of the focusing device. If the image sensor plate is moved a distance in said direction, the image sensor is moved an equal distance in the equal direction.

It is to be noted that throughout this application, by referring to the lens plate 120 and/or the image sensor plate 140, is also meant a bottom plate 240, 440, 540, 640 and/or a top plate 220, 420, 520, 620.

In fig.1, the rotation of the rotatable structures 150 is induced by the image sensor plate 140 rotating. The image sensor plate 140 has a circular brim 145 which, during rotation, slides in groves 137 of the image sensor holder 135. In this embodiment, the lens plate 120 is stationary rotation wise in relation to the housing 190.

A distance 170 between the lens plate 120 and the image sensor plate 140 is adjusted by winding the strips 160 onto or off the rotatable structures 150. This has the effect that a distance between the lens 110 and the image sensor 130 is adjusted.

The strips can be wound onto or off the rotatable structures due to rotation of the rotatable structures in relation to at least one of the lens plate and the image sensor plate. In one embodiment, the strips can be wound onto or off the rotatable structures due to rotation of the rotatable structures in relation to both the lens plate and the image sensor plate.

The rotation of the rotatable structures in relation to at least one of the lens plate and the image sensor plate can be induced by, e.g., the image sensor plate rotating or the lens plate rotating. Preferably, the material of the strips and/or the rotatable structures, the lens plate and the image sensor plate are chosen so that frictional forces are induced in between them during rotation of the rotatable structures.

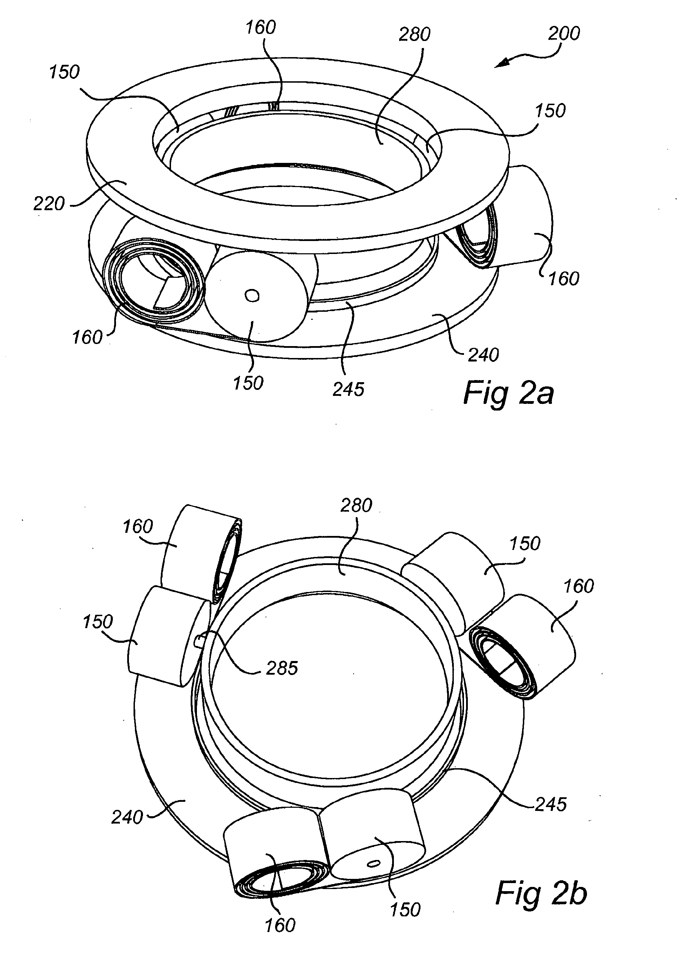

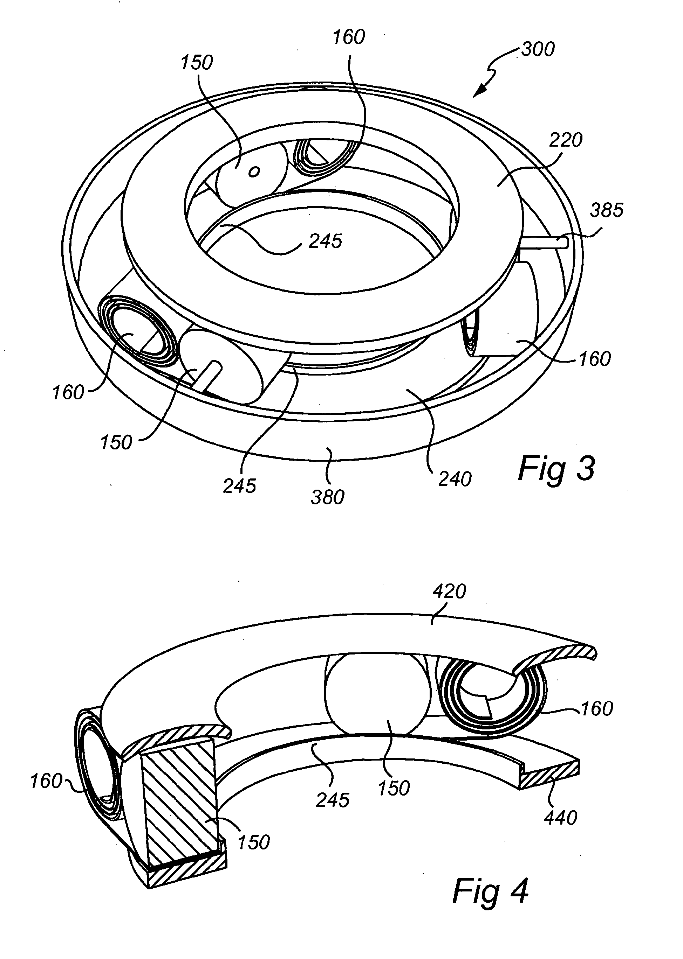

The rotation of the rotatable structures in relation to at least one of the lens plate and the image sensor plate can also be induced by, e.g., the holder 280, 380. The holder 280, 380 will be explained more in detail in connection with figs. 2 and 3. More particularly, the rotation of the rotatable structures in relation to at least one of the lens plate and the image sensor plate is, e.g., induced by the holder 280, 380 rotating.

The lens 110 is here connected to a lens holder 115 through threaded portions in the lens 110 and in the lens holder 115. When the distance 170 is adjusted due to the rotation of the rotatable structures 150, the lens holder 115 is moved an equal distance since the lens holder 115 and the lens plate 120 are attached to each other. This causes rails 117 of the lens holder 115 to slide through openings 139 of the image sensor holder 135.

It is to be noted that all sorts of embodiments and variations are possible.

It is to be noted that any number or rotatable structures is possible, as long as there are at least two rotatable structures.

The rotatable structures can, e.g., be wheels, drums, rolls, or rollers. The strips can, e.g., be ribbons or tapes. The strips and the rotatable structures can, e.g., be made of plastic and/or metallic.

If the lens 110 and the image sensor 130 are essentially parallel with each other, this results in better the quality of the images acquired.

Fig. 2a is a perspective view of an embodiment of the inventive focusing device. The focusing device 200 comprises three rotatable structures 150 and three strips 160. The focusing device further comprises a top plate 220 and a bottom plate 240. The top plate 220 can be used as either an image sensor plate or a lens plate. The bottom plate 240 can be used as either an image sensor plate or a lens plate.

As is illustrated in, e.g., Fig. 2a, the rotatable structures 150 have a linearly increasing radius around their perimeters from a smallest to a largest radius. A thickness of each strip 160 corresponds to a difference between the largest radius and the smallest radius. This results in a smooth and even winding of the strips 160 onto and off the rotatable structures 150 and thus a smooth and continuous focusing adjustment of distance between the lens 110 and the image sensor 130.

The focusing device 200 comprises a holder 280. The holder 280 is arranged for holding the rotatable structures 150 at a fixed distance from each other. The rotatable structures 150 are arranged around the holder 280 which results in a more compact focusing device 200. The holder 280 and the rotatable structures 150 can be connected by an axle 285 extending from the holder 280 into an opening of each rotatable structure 150, and/or an axle 285 extending from each rotatable structure 150 into the holder 280. The axle 285 is illustrated in, e.g., Fig. 2b. Fig. 2b is a perspective view of the embodiment of Fig. 2a but without the top plate 220.

Fig.3 is a perspective view of an embodiment of the inventive focusing device. The focusing device 300 comprises three rotatable structures 150 and three strips 160. The focusing device further comprises a top plate 220 and a bottom plate 240. The top plate 220 can be used as either an image sensor plate or a lens plate. The bottom plate 240 can be used as either an image sensor plate or a lens plate.

The focusing device 300 comprises a holder 380. The holder 380 is arranged for holding the rotatable structures 150 at a fixed distance from each other. The rotatable structures 150 are arranged in an opening of the holder 380. The holder 380 and the rotatable structures 150 can be connected by an axle 385 extending from the holder 380 into an opening of each rotatable structure 150, and/or an axle 385 extending from each rotatable structure 150 into the holder 380.

The inventive focusing can comprise a retainer for retaining the rotatable structures within a circle within a perimeter of at least one of the lens plate and the image sensor plate.

In the focusing device 200 of Figs. 2ab, the retainer is embodied as the holder 280 and as a circular brim 245 in the bottom plate 240 arranged on an inside of the rotatable structures 150.

In the focusing device 300 of Fig. 3, the retainer is embodied as the holder 380 and as a circular brim 245 in the bottom plate 240 arranged on an inside of the rotatable structures 150.

When the retainer is embodied as the holder, preferably, nuts are used for keeping the rotatable structures from dislodging from the holder.

In Fig. 4, the retainer is embodied as a circular arched portion of the top plate 420 and as a circular brim 245 in the bottom plate 440 arranged on an inside of the rotatable structures 150. The circular arched portion of the top plate 420 at least partially encloses the rotatable structures 150.

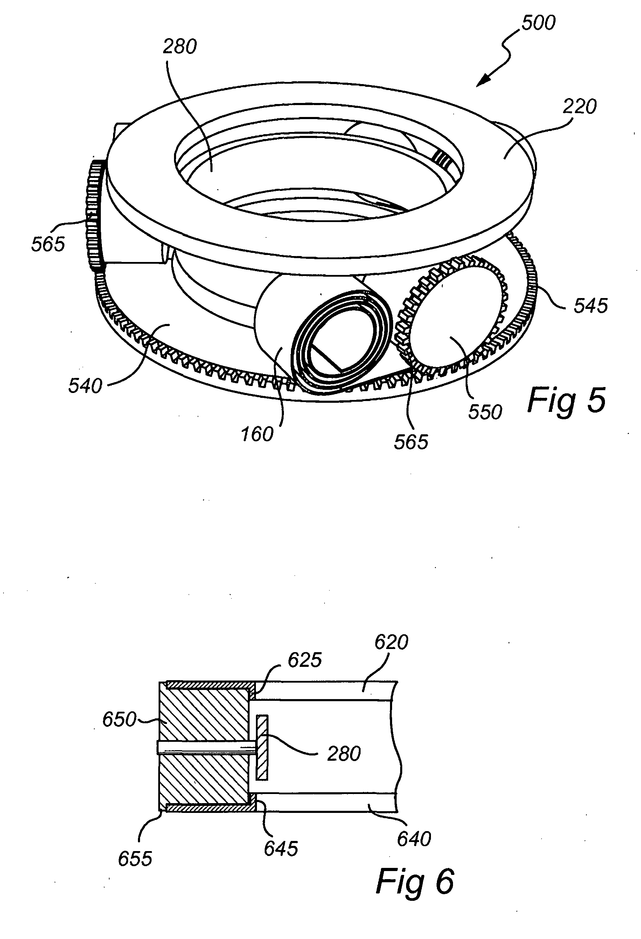

Fig. 5 illustrates a focusing device 500 having a top plate 220, a holder 280, a bottom plate 540, three rotatable structures 550, and three strips 160. Each rotatable structure 560 has a gear ring 565. The bottom plate 540 has a gear ring 545. The gear rings 545 and 565 are arranged to engage in each other. The gear rings can be arranged on an inside of the top plate or bottom plate and on an inside of the rotatable structures (not shown). Preferably, in this embodiment, the gear ring of the image sensor plate or the lens plate is protruding in a direction towards the other plate which is advantageous in that the gear rings engage with each other easier. Alternatively, the gear rings can be arranged on an outside of the top plate or bottom plate and on an outside of the rotatable structures. Preferably, in this embodiment, the gear ring of the image sensor plate or the lens plate is below the image sensor plate or the lens plate in a direction from the other plate which is advantageous in that the strips are not damaged by the gear ring.

Fig. 6 illustrates a rotatable structure 650 arranged in between a top plate 620 and a bottom plate 640. In this embodiment, the retainer is embodied as a circular brim 625 arranged on an inside of the top plate 620. The retainer is also embodied as a circular brim 645 arranged on an inside of the bottom plate 640. Furthermore, a retainer in the form of a holder 280 is disclosed. Additionally, the rotatable structure 650 has a circular brim 655 on an outside which is also an embodiment of a retainer.

All retainers described in fig. 6 need not be used at once. Instead, one or more of the retainers can be used.

The rotatable structures 150 and/or the strips 160 are arranged in contact with the lens plate 120 and the image sensor plate 140. This enables the distance between the lens plate and the image sensor plate to be adjusted when winding the strips onto or off the rotatable structures. This since the diameter of the rotatable structures with the wound-on strips is increased or decreased.

The top, bottom, image sensor and lens plates need not be circular. They can, e.g., be quadratic.

A rotational axis of each rotatable structure 150 is parallel to an axis extending from a centre of at least one of the lens plate 120 and the image sensor plate 140 to a perimeter of at least one of the lens plate 120 and the image sensor plate 140.

The distance between the lens 110 and the image sensor 130 has a maximum value and wherein the focusing device 100, 200, 300, 400 comprises means for preventing the distance between the lens 130 and the image sensor 110 to exceed the maximum value. This said means is at least one from the group of a mechanical stop, a stop in the winding of the strips onto the rotatable structures or a stop controlled by a central processing unit controlling the rotation of the rotatable structures in relation to at least one of the lens plate 120 and the image sensor plate 140. This enables reuse of the focusing device after winding the strips onto the rotatable structures since it is possible to wind the strips off the rotatable structures again.

The lens plate 120 and the image sensor plate 140 are at least one from the group: of made of plastic, made of metallic, or coated with rubber.

The stop in the winding of the strips onto the rotatable structures is at least one from the group of: an end of each strip is attached to a part of the strip thus forming a loop structure, an end of each strip is bent such that it is orthogonal to the strip.

The stop in the winding of the strips onto the rotatable structures can also be described as at least one from the group of: an end of each strip is attached to a part of the strip thus forming a loop structure, an end of each strip is bent such that said end of each strip is orthogonal to the rotatable structure onto which it is wound when wound onto the rotatable structure.

It is to be noted that all embodiments and features described in this application are applicable on all aspects of the invention.

While the invention has been illustrated and described in detail in the drawings and foregoing description, such illustration and description are to be considered illustrative or exemplary and not restrictive; the invention is not limited to the disclosed embodiments.

Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. A single processor or other unit may fulfill the functions of several items recited in the claims. The mere fact that certain measures are recited in mutually different dependent claims does not indicate that a combination of these measures cannot be used to advantage. Any reference signs in the claims should not be construed as limiting the scope.

## Claims

1. Focusing device (100, 200, 300, 400) comprising:
a lens (110), a lens plate (120, 220, 420, 520, 620), an image sensor (130), an image sensor plate (140, 240, 440, 540, 640), at least two rotatable structures (150, 550, 650), and at least two strips (160),
wherein the lens (110) is connected to the lens plate (120, 220, 420, 520, 620), the image sensor is connected to the image sensor plate (140, 240,440,540,640), **characterized in that**
each strip (160) is arranged to be wound onto one of the rotatable structures (150, 550, 650), respectively, the rotatable structures (150, 550, 650) and the strips (160) are arranged between the lens plate (120, 220, 420, 520, 620) and the image sensor plate (140, 240, 440, 540, 640), the rotatable structures (150, 550, 650) and/or the strips (160) are arranged in contact with the lens plate (120, 220, 420, 520, 620) and the image sensor plate (140, 240, 440, 540, 640), and **in that**
a distance between the lens (110) and the image sensor is adjusted by winding the strips (160) onto or off the rotatable structures (150, 550, 650).

2. Focusing device according to claim 1, wherein the strips (160) are wound onto or off the rotatable structures (150, 550, 650) due to rotation of the rotatable structures (150, 550, 650) in relation to at least one of the lens plate (120, 220, 420, 520, 620) and the image sensor plate (140, 240, 440, 540, 640).

3. Focusing device according to any one of claims 1-2, wherein a rotational axis of each rotatable structure (150, 550, 650) is parallel to an axis extending from a centre of at least one of the lens plate (120, 220, 420, 520, 620) and the image sensor plate (140, 240, 440, 540, 640) to a perimeter of at least one of the lens plate (120, 220, 420, 520, 620) and the image sensor plate (140, 240, 440, 540, 640).

4. Focusing device according to any one of claims 1-3, wherein each rotatable structure (150, 550, 650) has a linearly increasing radius around its perimeter from a smallest to a largest radius, and wherein a thickness of each strip (160) corresponds to a difference between the largest radius and the smallest radius.

5. Focusing device according to any one of claims 1-4, wherein at least one of the image sensor plate (140, 240, 440, 540, 640) and the lens plate (120, 220, 420, 520, 620) are stationary.

6. Focusing device according to any one of claims 1-5, further comprising a holder (280, 380) for holding the rotatable structures (150, 550, 650) at a fixed distance from each other.

7. Focusing device according to claim 6, wherein the holder (380) and the rotatable structures (150) are connected by at least one from the group of:
an axle (285) extending from the holder (280) into an opening of each rotatable structure (150), and
an axle (385) extending from each rotatable structure (150) into the holder (380) .

8. Focusing device according to any one of claims 6-7, wherein the rotatable structures (150) are arranged in an opening of the holder (380), or wherein the rotatable structures (150) are arranged around the holder (280).

9. Focusing device according to any one of claims 6-8, wherein said rotation of the rotatable structures (150, 550, 650) in relation to at least one of the lens plate (120, 220, 420, 520, 620) and the image sensor plate (140, 240, 440, 540, 640) is arranged to be induced by at least one of the image sensor plate (140, 240, 440, 540, 640), the lens plate (120, 220, 420, 520, 620) and the holder.

10. Focusing device according to claim 9, wherein said rotation of the rotatable structures (150, 550, 650) in relation to at least one of the lens plate (120, 220, 420, 520, 620) and the image sensor plate (140, 240, 440, 540, 640) is arranged to be induced by at least one of the image sensor plate (140, 240, 440, 540, 640), the lens plate (120, 220, 420, 520, 620) and the holder rotating.

11. Focusing device according to any one of claims 1-10, further comprising a retainer for retaining the rotatable structures (150, 550, 650) within a circle within a perimeter of at least one of the lens plate (120, 220, 420, 520, 620) and the image sensor plate (140, 240, 440, 540, 640).

12. Focusing device according to claim 11, wherein the retainer is at least one from the group of:
the holder (280, 380) according to any one of claims 5-8,
a circular arched portion of at least one of the lens plate (420) and the image sensor plate at least partially enclosing the rotatable structures (150, 550, 650),
a circular brim (245) on at least one of the lens plate (240, 440) and the image sensor plate arranged on an inside of the rotatable structures (150, 550, 650), and
a circular brim (655) arranged on an outside of each of the rotatable structures (650).

13. Focusing device according to any one of claims 1-12, wherein the distance between the lens (110) and the image sensor has a maximum value and wherein the focusing device comprises means for preventing the distance between the lens (110) and the image sensor to exceed the maximum value.

14. Focusing device according to claim 13, wherein
said means is at least one from the group of a mechanical stop, a stop in the winding of the strips (160) onto the rotatable structures (150, 550, 650) or a stop controlled by a central processing unit controlling the rotation of the rotatable structures (150, 550, 650) in relation to at least one of the lens plate (120, 220, 420, 520, 620) and the image sensor plate (140, 240, 440, 540, 640).

15. Focusing device according to any one of claims 1-14, further comprising a first gear ring (545) arranged on at least one of the lens plate and the image sensor plate (540) and a second gear ring (565) arranged on each rotatable structure (550) and wherein the gear rings are arranged to engage in each other.

## Patentansprüche

1. Fokussierungsvorrichtung (100, 200, 300, 400) mit:
einer Linse (110), einer Linsenplatte (120, 220, 420, 520, 620), einem Bildsensor (130), einer Bildsensorplatte (140, 240, 440, 540, 640), mindestens zwei drehbaren Konstruktionen (150, 550, 650) und mindestens zwei Streifen (160),
wobei die Linse (110) mit der Linsenplatte (120, 220, 420, 520, 620) verbunden ist, wobei der Bildsensor mit der Bildsensorplatte (140, 240, 440, 540, 640) verbunden ist, **dadurch gekennzeichnet, dass**
jeder Streifen (160) eingerichtet ist, auf jeweils eine der drehbaren Konstruktionen (150, 550, 650) aufgewickelt zu werden, wobei die drehbaren Konstruktionen (150, 550, 650) und die Streifen (160) zwischen der Linsenplatte (120, 220, 420, 520, 620) und der Bildsensorplatte (140, 240, 440, 540, 640) angeordnet sind, wobei die drehbaren Konstruktionen (150, 550, 650) und/oder die Streifen (160) in Kontakt mit der Linsenplatte (120, 220, 420, 520, 620) und der Bildsensorplatte (140, 240, 440, 540, 640) angeordnet sind, und dadurch, dass
ein Abstand zwischen der Linse (110) und dem Bildsensor einstellbar ist, indem der Streifen (160) auf die drehbaren Konstruktionen (150, 550, 650) aufgewickelt oder von ihnen abgewickelt wird.

2. Fokussierungsvorrichtung nach Anspruch 1, wobei die Streifen (160) infolge der Drehung der drehbaren Konstruktionen (150, 550, 650) in Bezug auf mindestens eine von der Linsenplatte (120, 220, 420, 520, 620) und der Bildsensorplatte (140, 240, 440, 540, 640) auf die drehbaren Konstruktionen (150, 550, 650) aufgewickelt oder von ihnen abgewickelt werden.

3. Fokussierungsvorrichtung nach einem der Ansprüche 1-2, wobei eine Drehachse einer jeden drehbaren Konstruktion (150, 550, 650) parallel zu einer Achse ist, die sich von einer Mitte mindestens einer von der Linsenplatte (120, 220, 420, 520, 620) und der Bildsensorplatte (140, 240, 440, 540, 640) zu einem Umfang mindestens einer von der Linsenplatte (120, 220, 420, 520, 620) und der Bildsensorplatte (140, 240, 440, 540, 640) erstreckt.

4. Fokussierungsvorrichtung nach einem der Ansprüche 1-3, wobei jede drehbare Konstruktion (150, 550, 650) einen um ihren Umfang herum von einem kleinsten zu einem größten Radius linear zunehmenden Radius aufweist und wobei eine Dicke eines jeden Streifens (160) einer Differenz zwischen dem größten und dem kleinsten Radius entspricht.

5. Fokussierungsvorrichtung nach einem der Ansprüche 1-4, wobei mindestens eine von der Bildsensorplatte (140, 240, 440, 540, 640) und der Linsenplatte (120, 220, 420, 520, 620) feststehend ist.

6. Fokussierungsvorrichtung nach einem der Ansprüche 1-5, ferner mit einem Halter (280, 380), um die drehbaren Konstruktionen (150, 550, 650) in einem festgelegten Abstand voneinander zu halten.

7. Fokussierungsvorrichtung nach Anspruch 6, wobei der Halter (380) und die drehbaren Konstruktionen (150) durch mindestens eines aus der folgenden Gruppe verbunden sind:
eine Achse (285), die sich von dem Halter (280) aus in eine Öffnung einer jeden drehbaren Konstruktion (150) hinein erstreckt, und
eine Achse (385), die sich von jeder drehbaren Konstruktion (150) aus in den Halter (380) hinein erstreckt.

8. Fokussierungsvorrichtung nach einem der Ansprüche 6-7, wobei die drehbaren Konstruktionen (150) in einer Öffnung des Halters (380) angeordnet sind oder wobei die drehbaren Konstruktionen (150) um den Halter (280) herum angeordnet sind.

9. Fokussierungsvorrichtung nach einem der Ansprüche 6-8, wobei die Drehung der drehbaren Konstruktionen (150, 550, 650) in Bezug auf mindestens eine von der Linsenplatte (120, 220, 420, 520, 620) und der Bildsensorplatte (140, 240, 440, 540, 640) ausgelegt ist, durch mindestens eines von der Bildsensorplatte (140, 240, 440, 540, 640), der Linsenplatte (120, 220, 420, 520, 620) und dem Halter erzeugt zu werden.

10. Fokussierungsvorrichtung nach Anspruch 9, wobei die Drehung der der drehbaren Konstruktionen (150, 550, 650) in Bezug auf mindestens eine von der Linsenplatte (120, 220, 420, 520, 620) und der Bildsensorplatte (140, 240, 440, 540, 640) ausgelegt ist, durch das Drehen von mindestens einem von der Bildsensorplatte (140, 240, 440, 540, 640), der Linsenplatte (120, 220, 420, 520, 620) und dem Halter erzeugt zu werden.

11. Fokussierungsvorrichtung nach einem der Ansprüche 1-10, ferner mit einer Arretierung zum Festhalten der drehbaren Konstruktionen (150, 550, 650) innerhalb eines Kreises innerhalb eines Umfangs von mindestens einer von der Linsenplatte (120, 220, 420, 520, 620) und der Bildsensorplatte (140, 240, 440, 540, 640).

12. Fokussierungsvorrichtung nach Anspruch 11, wobei die Arretierung mindestens eine ist aus der folgenden Gruppe:
der Halter (280, 380) nach einem der Ansprüche 5-8,
ein kreisförmig gewölbter Anteil von mindestens einer von der Linsenplatte (420) und der Bildsensorplatte, der mindestens teilweise die drehbaren Konstruktionen (150, 550, 650) umfasst,
ein kreisförmiger Rand (245) auf mindestens einer von der Linsenplatte (240, 440) und der Bildsensorplatte, der auf einer Innenseite der drehbaren Konstruktionen (150, 550, 650) angeordnet ist, und
ein kreisförmiger Rand (655), der auf einer Außenseite der drehbaren Konstruktionen (650) angeordnet ist.

13. Fokussierungsvorrichtung nach einem der Ansprüche 1-12, wobei der Abstand zwischen der Linse (110) und dem Bildsensor einen Maximalwert aufweist und wobei die Fokussierungsvorrichtung ein Mittel umfasst, um zu verhindern, dass der Abstand zwischen der Linse (110) und dem Bildsensor den Maximalwert überschreitet.

14. Fokussierungsvorrichtung nach Anspruch 13, wobei
das Mittel mindestens eines aus der Gruppe eines mechanischen Anschlags, eines Anschlags in der Wicklung der Streifen (160) auf die drehbaren Konstruktionen (150, 550, 650) oder eines Anschlags ist, der durch eine Zentraleinheit gesteuert wird, welche die Drehung der drehbaren Konstruktionen (150, 550, 650) in Bezug auf mindestens eine von der Linsenplatte (120, 220, 420, 520, 620) und der Bildsensorplatte (140, 240, 440, 540, 640) steuert.

15. Fokussierungsvorrichtung nach einem der Ansprüche 1-14, ferner mit einem ersten Zahnkranz (545), der auf mindestens einer von der Linsenplatte und der Bildsensorplatte (540) angeordnet ist, und mit einem zweiten Zahnkranz (565), der auf jeder drehbaren Konstruktion (550) angeordnet ist, und wobei die Zahnkränze eingerichtet sind, ineinander einzugreifen.

## Revendications

1. Dispositif de focalisation (100, 200, 300, 400) comprenant :
une lentille (110), une plaque de lentille (120, 220, 420, 520, 620), un capteur d'image (130), une plaque de capteur d'image (140, 240, 440, 540, 640), au moins deux structures rotatives (150, 550, 650), et au moins deux bandes (160),
dans lequel la lentille (110) est reliée à la plaque de lentille (120, 220, 420, 520, 620), le capteur d'image est relié à la plaque de capteur d'image (140, 240, 440, 540, 640), **caractérisé en ce que**
chaque bande (160) est agencée pour être enroulée respectivement sur l'une des structures rotatives (150, 550, 650), les structures rotatives (150, 550, 650) et les bandes (160) sont agencées entre la plaque de lentille (120, 220, 420, 520, 620) et la plaque de capteur d'image (140, 240, 440, 540, 640), les structures rotatives (150, 550, 650) et/ou les bandes (160) sont agencées en contact avec la plaque de lentille (120, 220, 420, 520, 620) et la plaque de capteur d'image (140, 240, 440, 540, 640), et **en ce que**
une distance entre la lentille (110) et le capteur d'image est ajustée en enroulant les bandes (160) sur les structures rotatives (150, 550, 650) ou en les déroulant de celles-ci.

2. Dispositif de focalisation selon la revendication 1, dans lequel les bandes (160) sont enroulées sur les structures rotatives (150, 550, 650) ou déroulées de celles-ci en raison de la rotation des structures rotatives (150, 550, 650) par rapport à au moins l'une de la plaque de lentille (120, 220, 420, 520, 620) et de la plaque de capteur d'image (140,240,440,540,640).

3. Dispositif de focalisation selon l'une quelconque des revendications 1 et 2, dans lequel un axe de rotation de chaque structure rotative (150, 550, 650) est parallèle à un axe s'étendant à partir d'un centre d'au moins l'une de la plaque de lentille (120, 220, 420, 520, 620) et de la plaque de capteur d'image (140, 240, 440, 540, 640) jusqu'à un périmètre d'au moins l'une de la plaque de lentille (120, 220, 420, 520, 620) et de la plaque de capteur d'image (140, 240, 440, 540, 640).

4. Dispositif de focalisation selon l'une quelconque des revendications 1 à 3, dans lequel chaque structure rotative (150, 550, 650) a un rayon croissant linéairement autour de son périmètre du plus petit rayon au plus grand rayon, et dans lequel une épaisseur de chaque bande (160) correspond à une différence entre le plus grand rayon et le plus petit rayon.

5. Dispositif de focalisation selon l'une quelconque des revendications 1 à 4, dans lequel au moins l'une de la plaque de capteur d'image (140, 240, 440, 540, 640) et de la plaque de lentille (120, 220, 420, 520, 620) est immobile.

6. Dispositif de focalisation selon l'une quelconque des revendications 1 à 5, comprenant en outre un support (280, 380) pour supporter les structures rotatives (150, 550, 650) à une distance fixe l'une de l'autre.

7. Dispositif de focalisation selon la revendication 6, dans lequel le support (380) et les structures rotatives (150) sont reliés par au moins l'un du groupe de :
un essieu (285) s'étendant du support (280) dans une ouverture de chaque structure rotative (150), et
un essieu (385) s'étendant de chaque structure rotative (150) dans le support (380).

8. Dispositif de focalisation selon l'une quelconque des revendications 6 et 7, dans lequel les structures rotatives (150) sont agencées dans une ouverture du support (380), ou dans lequel les structures rotatives (150) sont agencées autour du support (280).

9. Dispositif de focalisation selon l'une quelconque des revendications 6 à 8, dans lequel ladite rotation des structures rotatives (150, 550, 650) par rapport à au moins l'une de la plaque de lentille (120, 220, 420, 520, 620) et de la plaque de capteur d'image (140, 240, 440, 540, 640) est agencée pour être induite par au moins l'un de la plaque de capteur d'image (140, 240, 440, 540, 640), de la plaque de lentille (120, 220, 420, 520, 620) et du support.

10. Dispositif de focalisation selon la revendication 9, dans lequel ladite rotation des structures rotatives (150, 550, 650) par rapport à au moins l'une de la plaque de lentille (120, 220, 420, 520, 620) et de la plaque de capteur d'image (140, 240, 440, 540, 640) est agencée pour être induite par au moins l'un de la plaque de capteur d'image (140, 240, 440, 540, 640), de la plaque de lentille (120, 220, 420, 520, 620) et du support en rotation.

11. Dispositif de focalisation selon l'une quelconque des revendications 1 à 10, comprenant en outre un dispositif de rétention pour retenir les structures rotatives (150, 550, 650) à l'intérieur d'un cercle à l'intérieur d'un périmètre d'au moins l'une de la plaque de lentille (120, 220, 420, 520, 620) et de la plaque de capteur d'image (140, 240, 440, 540, 640).

12. Dispositif de focalisation selon la revendication 11, dans lequel le dispositif de rétention et au moins l'un du groupe constitué de :
le support (280, 380) selon l'une quelconque des revendications 5 à 8,
une portion arquée circulaire d'au moins l'une de la plaque de lentille (420) et de la plaque de capteur d'image renfermant au moins partiellement les structures rotatives (150, 550, 650),
un bord circulaire (245) sur au moins l'une de la plaque de lentille (240, 440) et de la plaque de capteur d'image agencé sur un intérieur des structures rotatives (150, 550, 650), et
un bord circulaire (655) agencé sur un extérieur de chacune des structures rotatives (650).

13. Dispositif de focalisation selon l'une quelconque des revendications 1 à 12, dans lequel la distance entre la lentille (110) et le capteur d'image a une valeur maximale et dans lequel le dispositif de focalisation comprend des moyens pour empêcher que la distance entre la lentille (110) et le capteur d'image ne dépasse la valeur maximale.

14. Dispositif de focalisation selon la revendication 13, dans lequel
lesdits moyens sont au moins l'un du groupe constitué d'une butée mécanique, d'une butée dans l'enroulement des bandes (160) sur les structures rotatives (150, 550, 650) ou d'une butée commandée par une unité de traitement centrale commandant la rotation des structures rotatives (150, 550, 650) par rapport à au moins l'une de la plaque de lentille (120, 220, 420, 520, 620) et de la plaque de capteur d'image (140, 240, 440, 540, 640).

15. Dispositif de focalisation selon l'une quelconque des revendications 1 à 14, comprenant en outre une première couronne dentée (545) agencée sur au moins l'une de la plaque de lentille et de la plaque de capteur d'image (540) et une deuxième couronne dentée (565) agencée sur chaque structure rotative (550) et dans lequel les couronnes dentées sont agencées pour se mettre en prise l'une avec l'autre.
